# EUROPÄISCHE PATENTSCHRIFT

(11) **EP 4 470 884 B1**
(45) Veröffentlichungstag und Bekanntmachung des Hinweises auf die Patenterteilung: **11.06.2025**
(21) Anmeldenummer: 24169113.8
(22) Anmeldetag: 09.04.2024
(51) Int. Cl.: B62D 7/14

(54) **HYDRAULISCHE SCHALTUNG**
HYDRAULIC CIRCUIT
CIRCUIT HYDRAULIQUE

(30) Priorität: 31.05.2023 DE 102023114292
(43) Veröffentlichungstag der Anmeldung: 04.12.2024
(73) Patentinhaber: Weber-Hydraulik GmbH, 74363 Güglingen (DE)
(72) Erfinder: Winkler, Torsten, 74397 Pfaffenhofen (DE)
(74) Vertreter: LBP Lemcke, Brommer & Partner Patentanwälte mbB

(56) Entgegenhaltungen:
- WO-A1-2022/018135

## Beschreibung

Die vorliegende Erfindung betrifft eine hydraulische Schaltung mit einem Hydraulikzylinder, der im Fehler- oder Deaktivierungsfall in eine sichere Ausfallstellung gebracht werden kann. Eine solche Schaltung kann insbesondere für ein Lenksystem eines mehrachsigen Fahrzeugs eingesetzt werden.

Eine hydraulische Schaltung nach dem Oberbegriff des Anspruchs 1 ist aus der WO 2022/018135 A1 bekannt. Diese beschreibt eine hydraulische Hinterachslenkung mit einem Lenkzylinder, der einen Zylinderraum, einen dichtend in dem Zylinderraum gelagerten Kolben, der den Zylinderraum in zwei Arbeitsräume unterteilt, und mindestens eine von dem Kolben getragene Kolbenstange aufweist. Über eine mechanische schaltbare Ventilanordnung mit drei Schaltstellungen, die von einem mechanischen Tastelement, welches mit der Kolbenstange zusammenwirkt, umgeschaltet wird, wird in Abhängigkeit der Auslenkung des Kolbens einer der Arbeitsräume mit einer Tankrückleitung verbunden, um im Fehlerfall eine Rückstellbewegung der Kolbenstange in die Mittelstellung zu ermöglichen. In der mittleren Schaltstellung, die der Geradeausstellung der Lenkung entspricht, ist die Verbindung zwischen den Arbeitsräumen und der Tankrückleitung gesperrt.

Da die Ventilanordnung über das mechanische Tastelement permanent mit der Kolbenstange in Kontakt steht, wird die Ventilanordnung bei jedem Lenkeinschlag entsprechend umgeschaltet. Über die Lebensdauer eines Lenksystems sind hierbei durchaus mehrere Millionen Lastwechsel für die Betätigung zu erwarten. Diese Anforderung ist bei der Auslegung der Ventilanordnung im Hinblick auf Werkstoffauswahl, Oberflächenrauheit, Bauteilgeometrie sowie der in den Ventilen auftretenden Kräfte entsprechend zu berücksichtigen.

Die vorliegende Erfindung hat sich zur Aufgabe gestellt, die bekannte Hydraulikschaltung vor allem im Hinblick auf Ausfallsicherheit und Lebensdauer zu verbessern.

Die Aufgabe wird gelöst durch die Merkmale des Anspruchs 1. Vorteilhafte Ausgestaltungen sind den abhängigen Ansprüchen zu entnehmen.

Bei einer Hydraulikschaltung der eingangs genannten Art ist erfindungsgemäß vorgesehen, dass die Ventilanordnung eine vierte Schaltstellung aufweist, in der die Verbindung zwischen den Arbeitsräumen oder zu der Tankrückleitung gesperrt ist und die Schaltung einen vom Hydraulikzylinder separaten insbesondere hydraulischen Aktuator aufweist, welcher ausgebildet ist, bei Ansteuerung das Tastelement aus der Zusammenwirkung mit dem Kolben oder Kolbenstange anzuheben und die Ventilanordnung in die vierte Schaltstellung zu schalten.

Auf diese Weise werden die Vorteile einer mechanischen Speicherung des Lenkzustandes, also an welcher Stelle sich die Kolbenstange befindet, als Schaltzustand der Ventilanordnung mit dem Vorteil einer hydraulischen Deaktivierung der Ventilanordnung im Normalbetrieb kombiniert. Hierzu kann an geeigneter Stelle an der Druckversorgung ein Vorsteuerdruck abgegriffen werden, über welchen jeweils zu Beginn des Druckaufbaus (Starten des Fahrzeugs) die Ventilanordnung hydraulisch deaktiviert wird und im Fehler- oder Deaktivierungsfall dann dieser hydraulische Vorsteuerdruck über eine Tankrückleitung abgebaut wird, um die Ventilanordnung zu aktivieren. Somit findet ausschließlich im Fehler- oder Deaktivierungsfall eine Ansteuerung der Bedienanordnung in der Form statt, dass die eingangs beschriebenen drei Schaltpositionen eingenommen werden können. Im Normalbetrieb befindet sich hingegen die Schaltungsanordnung in der vierten Schaltposition, in der eine Verbindung der Arbeitsräume zur Tankrückleitung verhindert ist. Im Fehler- bzw. Deaktivierungsfall, wenn beispielsweise durch einen Stromausfall kein hydraulischer Vorsteuerdruck mehr anliegt, steht das mechanische Tastelement wieder in Wirkverbindung mit Kolben oder Kolbenstange und schaltet die Schaltungsanordnung in Abhängigkeit der Auslenkung des Kolbens zwischen den drei Schaltstellungen um. Hierdurch wird, gegebenenfalls mit weiteren Hydraulikkomponenten, bewirkt, dass sich der Kolben durch von außen einwirkende Kräfte stets nur in Richtung der sicheren Ausfallstellung, der im Falle eines Lenksystems in der Regel der Geradeausstellung der Lenkung entspricht, bewegen kann.

Bei Erreichen der sicheren Ausfallstellung kann der Hydraulikzylinder in an sich bekannter Weise mechanisch und/oder hydraulisch arretiert werden. Eine hydraulische Arretierung wird u.a. dadurch erreicht, dass in der zweiten Schaltstellung der Schaltungsanordnung, die der sicheren Ausfallstellung entspricht, eine Entlastung eines der Arbeitsräume über die Schaltungsanordnung zum Tank hin unterbunden ist.

Wenn der Hydraulikzylinder als Gleichgangzylinder ausgebildet ist, kann zur Rückführung des Kolbens in die sichere Ausfallstellung, anstatt jeweils einen der Arbeitsräume zum Tank hin zu entlasten, auch eine unidirektionale hydraulische Verbindung zwischen den Arbeitsräumen geschaltet werden, sodass Hydraulikflüssigkeit statt in Richtung zum Tank direkt in den gegenüberliegenden Arbeitsraum strömen kann.

Die Ventilanordnung kann mit einem oder mehreren Ventilen realisiert werden. So können in einer Ausführungsform zwei Ventile, nämlich ein normal offenes und ein normal geschlossenes Ventil verwendet werden, welche jeweils zwischen einem der beiden Arbeitsräumen und der Tankrückleitung angeordnet sind und von dem Tastelement gemeinsam geschaltet werden. Hierbei befinden sich in der ersten Schaltstellung der Ventilanordnung beide Ventile in ihrer unbetätigten, normal offenen bzw. normal geschlossenen Ventilstellung, in der zweiten Schaltstellung befindet sich das normal offene Ventil bereits in der betätigten, geschlossenen Ventilstellung. Das normal geschlossene Ventil befindet sich noch in der unbetätigten, geschlossen Ventileinstellung. In der dritten Schaltstellung befindet sich das normal offene Ventil in der betätigten, geschlossenen Ventilstellung und das normal geschlossene Ventil befindet sich ebenfalls in der betätigten, offenen Ventilstellung.

Die vierte Schaltstellung kann dadurch realisiert werden, dass das normal offene Ventil sind in der betätigten, geschlossenen Ventilstellung befindet und das normal geschlossene Ventil in einer über seine offene Ventilstellung hinausgeschalteten geschlossenen Ventilstellung. Das normal geschlossene Ventil besitzt somit drei Ventilstellungen, nämlich die normal geschlossene, die offene und die über die offene hinausgeschaltete geschlossene Ventilstellung.

Die gemeinsame Betätigung der beiden Ventile kann realisiert werden, indem das normal offene Ventil über ein Federelement geschaltet wird, welches nach Erreichen der betätigten, geschlossenen Schaltstellung zum Ausgleich eines weiteren Hubwegs des Tastelements in der dritten und vierten Schaltstellung lediglich komprimiert wird, ohne dass das normal offene Ventil seine Ventilstellung ändert.

Eine kaskadierte Umschaltung des normal offenen und normal geschlossenen Ventils, sodass also das normal offene Ventil zum Erreichen der zweiten Schaltstellung bereits umgeschaltet, das normal geschlossene Ventil jedoch noch in der unbetätigten Ventilstellung ist, kann dadurch erreicht werden, dass in Bezug auf das normal geschlossene Ventil das Tastelement zunächst einen Leerhub ausführt.

In einer alternativen Ausführungsform kann die Ventilanordnung auch mit zwei normal geschlossenen Ventilen realisiert werden, welche jeweils zwischen einem der beiden Arbeitsräume der Tankrückleitung angeordnet sind und welche gegensinnig zueinander angeordnet sind, sodass sie von dem Tastelement nacheinander geschaltet werden. In der zweiten Schaltstellung befindet sich das Tastelement in einer Neutralposition, in der beide Ventile unbetätigt sind. In der ersten Schaltstellung befindet sich das Tastelement in einer Position, in der das erste der beiden normal geschlossenen Ventile sich im betätigten, offenen Zustand befindet. Das zweite Ventil ist in dieser Schaltstellung unbetätigt. In der dritten Schaltstellung ist hingegen das erste Ventil unbetätigt, und das zweite Ventil befindet sich in der betätigten, offenen Ventilstellung. Das Tastelement schaltet somit ausgehend von der Neutralstellung, in der beide Ventile unbetätigt sind, je nach Auslenkungsrichtung entweder das eine oder das andere Ventil.

Die vierte Schaltstellung kann hierbei dadurch realisiert werden, dass das zweite Ventil sich in einer über die offene Schaltstellung hinausgeschalteten geschlossenen Ventilstellung befindet. In der vierten Schaltstellung sind also beide Ventile geschlossen, wobei das erste unbetätigt ist und das zweite sich an einer betätigten, aber geschlossenen Ventilstellung befindet.

In einer weiteren alternativen Ausführungsform kann die Ventilanordnung mithilfe eines 3/4-Wegeventils realisiert werden, also einem Ventil, welches mindestens drei Anschlüsse und mindestens vier Ventilstellungen umfasst, wobei einer der Anschlüsse mit der Tankrückleitung und die anderen beiden Anschlüsse jeweils mit einem der Arbeitsräume verbunden sind.

Tastelement und Aktuator können als separate Bauteile ausgeführt sein. Dabei kann der Aktuator in beliebiger Weise angetrieben sein, also sowohl hydraulisch, als auch pneumatisch, elektrisch oder magnetisch. Entsprechend erfolgt die Ansteuerung des Aktuators hydraulisch, pneumatisch oder elektrisch. Vorzugsweise ist der Aktuator jedoch hydraulisch ausgebildet, sodass er als Teil einer hydraulischen Folgeschaltung wirken und mit dem Druck aus der hydraulischen Druckversorgung betrieben werden kann, bei deren Ausfall die Ventilanordnung durch Wegfall des entsprechenden Steuerdrucks automatisch aktiviert wird.

Bei einer bevorzugten Weiterbildung kann das Tastelement insbesondere auch in der Art einer Kolbenstange in den hydraulischen Aktuator integriert sein. Dies führt zu einem sehr kompakten und robusten Aufbau.

Der hydraulische Aktuator kann insbesondere als einfach wirkender, federrückgestellter Hydraulikzylinder ausgeführt sein.

Die erfindungsgemäße hydraulische Schaltung kann weitere Schaltungselemente aufweise. So kann insbesondere vorgesehen sein, dass zwischen den beiden Arbeitsräumen und der Tankrückleitung in Reihe mit der Ventilanordnung jeweils ein in Tankrichtung öffnendes Rückschlagventil angeordnet ist. Hierdurch wird sichergestellt, dass, wenn einer der Arbeitsräume über die Ventilanordnung mit der Tankrückleitung verbunden ist, der Kolben nur in Richtung der sicheren Ausfallstellung bewegt werden kann, die der Geradeausstellung der Lenkung entspricht.

Die Integration der Schaltung kann weiter erhöht werden, indem in die Ventilanordnung jeweils ein in der ersten und dritten Schaltstellung wirksames, in Tankrichtung öffnendes Rückschlagventil integriert ist. Somit kann auf zusätzliche separate Rückschlagventile zwischen den Arbeitsräumen und der Tankrückleitung wie zuvor beschrieben verzichtet werden.

Bei der hydraulischen Schaltung kann zweckmäßigerweise vorgesehen sein, dass von jedem der beiden Arbeitsräume jeweils eine Rückleitung zu einem Tank führt und in jeder der Rückleitungen ein hydraulisch entsperrbares Ventil, insbesondere Lasthalteventil, angeordnet ist und die hydraulisch entsperrbaren Ventile als vordruckgesteuerte Ventile ausgebildet sind, deren Steueranschluss jeweils mit einem zu dem jeweils anderen Arbeitsraum führenden Pumpenanschluss verbunden ist. Soll somit der Hydraulikzylinder ausgelenkt wird, so wird von einer Hydraulikpumpe Hydraulikmedium zu einem der Arbeitsräume gefördert. Der Druck in der zu dem Arbeitsraum führenden Druckleitung liegt an dem gegenseitigen vordruckgesteuerten Ventil an und öffnet dieses, sodass Hydraulikmedium aus dem anderen Arbeitsraum in Richtung Tank zurückströmen kann, sodass der Kolben bewegt werden kann. Liegt an keinem der Arbeitsräume Druck von der Pumpe an, so sind die vordruckgesteuerten Ventile geschlossen und der Kolben behält im Normalbetrieb seine aktuelle Position bei, ohne dass von der Pumpe ständig Druck bereitgestellt und Hydraulikmedium gefördert werden müsste.

Im Fehlerfall ist der Hydraulikzylinder nach Erreichen des sicheren Ausfallzustands, welcher in der Regel der Mittelstellung des Kolbens im Zylinder entspricht, hydraulisch arretiert, da aus keinem der Arbeitsräume Hydraulikmedium in Richtung Tank entweihen kann.

Zusätzlich zu einer hydraulischen Arretierung kann der Hydraulikzylinder mit einer mechanischen Sperrvorrichtung versehen sein, die den Kolben oder die Kolbenstange bei Erreichen der Mittelstellung innerhalb des Hydraulikzylinders mechanisch arretiert. Die mechanische Sperrvorrichtung kann grundsätzlich in beliebiger Weise ausgebildet sein und sowohl integriert in den Hydraulikzylinder also auch separat von diesem, z.B. als Sperrklinke, die auf die Kolbenstange wirkt, ausgeführt sein.

Bei einer bevorzugten Ausführungsform ist vorgesehen, dass die Sperrvorrichtung in den Hydraulikzylinder integriert ist und mindestens ein Sperrglied aufweist, welches im gesperrten Zustand von einem Verriegelungselement in einer Einrastposition gehalten wird und das Verriegelungselement über einen zweiten, von Kolben und Kolbenstange separaten, hydraulisch betätigten Aktuator zwischen einer Sperrstellung, in der das Verriegelungselement das Sperrglied in der Einrastposition hält, und einer Entsperrstellung, in der das Verriegelungselement das Sperrglied freigibt, verstellbar ist. Über den zweiten Aktuator kann somit die Verriegelungsposition bei Erreichen der Mittelstellung aktiviert und die Verriegelung wieder gelöst werden. Liegt an dem Steuereingang des zweiten Aktuators ein Steuerdruck an, so verstellt dieser das Verriegelungselement in die Entsperrstellung, sodass eine Verriegelung aufgehoben bzw. eine Verriegelung des Kolbens beim Durchlaufen der Mittelstellung verhindert wird. Liegt an dem Steuereingang des Aktuators kein Druck an, so wird das Verriegelungselement in der Mittelstellung unter Wirkung einer Rückstellfeder in seine Sperrstellung verstellt, sodass der Kolben in der Mittelposition verriegelt wird.

Bei einer bevorzugten Weiterbildung können die Steuereingänge des ersten, auf das Tastelement wirkenden Aktuators und des zweiten, auf das Verriegelungselement wirkenden Aktuators miteinander verbunden sein und mit demselben Steuerdruck beaufschlagt werden. Somit wird durch Unterbrechen des Steuerdrucks einerseits das Tastelement wieder in Zusammenwirkung mit dem Kolben bzw. der Kolbenstange gebracht und schaltet somit die Ventilanordnung, die eine Zentrierung des Kolbens innerhalb des Zylinders herbeiführt. Gleichzeitig wird anderseits die mechanische Sperrvorrichtung scharf geschaltet, sodass der Kolben bei Erreichen der Mittelposition mechanisch arretiert wird.

Eine Aktivierung der automatischen Zentrierung des Hydraulikzylinders und gegebenenfalls Arretierfunktion in der Mittelstellung kann auf einfache Weise dadurch erreicht werden, dass die zu den ersten und gegebenenfalls zu dem zweiten Aktuator führende Steuerleitung über ein elektrisch betätigtes, stromlos geöffnetes Absperrventil mit der Tankrückleitung verbunden wird. Wird das Absperrventil stromlos geschaltet bzw. fällt die Stromversorgung aus, so öffnet das Absperrventil die Verbindung zum Tank und der Steuerdruck in der Steuerleitung fällt ab. Das Tastelement, welches nun nicht mehr über den ersten Aktuator aus der Zusammenwirkung mit dem Kolben bzw. der Kolbenstange gehalten wird, schaltet die Ventilanordnung je nach Auslenkung des Kolbens in einen der drei Schaltstellungen, die zur Zentrierung des Kolbens führen. Gleichzeitig wird gegebenenfalls der zweite Aktuator stromlos geschaltet, sodass das Verriegelungselement in der Mittelstellung federbetätigt in seine Sperrstellung zurücckehrt, in welcher es das Sperrglied in der Einrastposition hält.

Das Absperrventil kann somit einerseits zur Deaktivierung über ein Steuergerät stromlos geschaltet und somit geöffnet werden, wenn beispielsweise eine Deaktivierung der Hinterachslenkung beispielsweise bei höheren Geschwindigkeiten gewünscht ist. Andererseits wird die Sicherheitsschaltung zur Zentrierung des Hydraulikzylinders bei einem Defekt, der zu einem Ausfall der Stromversorgung führt, automatisch aktiviert, indem das Absperrventil selbsttätig öffnet.

Vorzugsweise ist vorgesehen, dass die Ventilanordnung gegebenenfalls mit weiteren hydraulischen Schaltungselementen in einen mit dem Hydraulikzylinder in baulicher Einheit verbundenen Ventilblock integriert ist. Durch die Integration aller Schaltungselemente und der hydraulischen Fluidwege kann ganz auf hydraulische Leitungen verzichtet werden, sodass das Risiko eines Defekts und Hydraulikmittelverlust durch einen Leitungsbruch minimiert ist. Der integrierte Hydraulikblock umfasst jegliche Funktionalität, um bei Ausfall der externen Druckversorgung - sei es auch durch einen Leitungsbruch - den in baulicher Einheit integrierten Hydraulikzylinder in den sicheren Ausfallzustand zu versetzen.

Diese und weitere Merkmale und Eigenschaften der Erfindung ergeben sich aus der nachfolgenden Beschreibung von Ausführungsbeispielen anhand der Figu-ren. Es zeigt:
- Figur 1: einen Hydraulikplan einer hydraulischen Schaltung in einem ersten Ausführungsbeispiel umfassend eine Ventilanordnung mit einem normal offenen und einem normal geschlossenen Ventil,
- Figuren 2a bis d: die Ventilanordnung aus Figur 1 in ihren vier Schaltzuständen,
- Figur 3: ein zweites Ausführungsbeispiel mit normal offenem und normal geschlossenem Ventil sowie integriertem Rückschlagventil,
- Figuren 4a bis d: eine alternative Ventilanordnung in einem dritten Ausführungsbeispiel mit zwei normal geschlossenen Ventilen und
- Figuren 5a bis d: eine alternative Ventilanordnung mit einem 3/4-Wegeventil in einem vierten Ausführungsbeispiel.

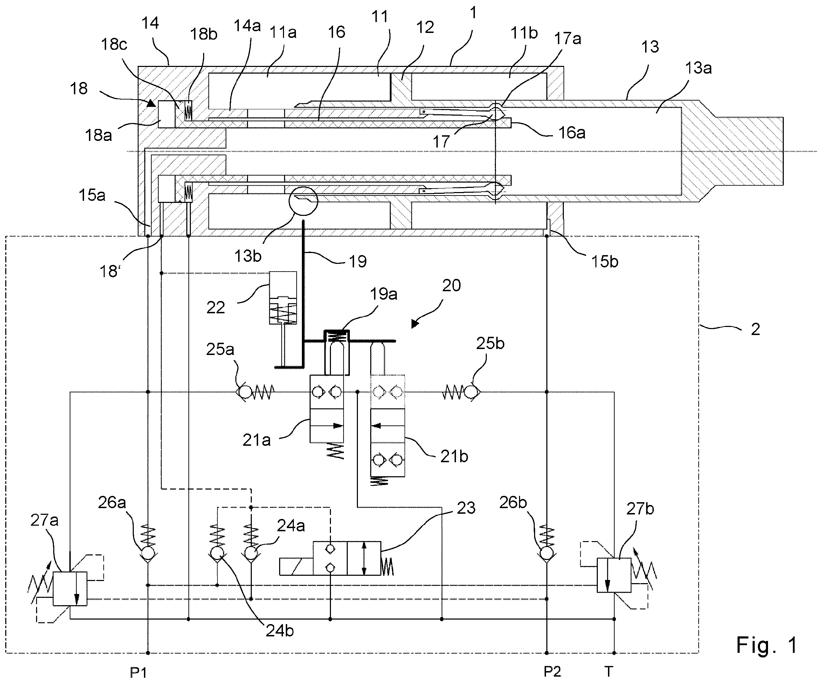

Ein erstes Ausführungsbeispiel einer hydraulischen Schaltung, die in diesem Fall als Hinterachslenkung eines mehrachsigen Fahrzeugs dient, ist schematisch in Figur 1 dargestellt. Die Schaltung umfasst einen als Lenkzylinder wirkenden Hydraulikzylinder 1 und einen in baulicher Einheit mit diesem verbundenen Ventilblock 2. Der Ventilblock 2 ist hierbei zur besseren Darstellbarkeit nicht maßstabsgetreu vergrößert und in Form eines Flussdiagramms gezeigt.

Der Hydraulikzylinder 1 umfasst einen Zylinderraum 11 mit einem darin längsbeweglich angeordneten Kolben 12, der in eine Kolbenstange 13 übergeht. Der Kolben 12 ist gegenüber der Zylinderwand des Hydraulikzylinders 1 gedichtet. Eine entsprechende Kolbendichtung an sich bekannter Bauart ist hier der besseren Übersichtlichkeit halber nicht dargestellt. Bei dem Hydraulikzylinder 1 handelt es sich um den bereits in der eingangs zitierten WO 2022/018135 A1, auf die hier zur Vermeidung unnötiger Wiederholungen vollinhaltlich Bezug genommen wird, beschriebenen Lenkzylinder.

Der Hydraulikzylinder 1 besitzt eine integrierte mechanische Sperrvorrichtung, auf die es im Rahmen der vorliegenden Erfindung im Einzelnen nicht ankommt. Die Funktion der Sperrvorrichtung sei jedoch nachfolgend kurz skizziert.

Die Kolbenstange 13 und der Kolben 12 sind mit einer Längsbohrung 13a versehen. Innerhalb des hierdurch entstandenen Hohlraums ist die Sperrvorrichtung untergebracht. Von einem Endstück 14 des Hydraulikzylinders 1 erstreckt sich ein Innenrohr 14a in den Zylinder 11 und in den Hohlraum 13a der Kolbenstange 13. Der von der Zylinderwand und dem Kolben 12 begrenzte Hohlraum auf der der Kolbenstange abgewandten Seite bildet zusammen mit dem Hohlraum 13a im Inneren der Kolbenstange 13 einen ersten Arbeitsraum 11a des Hydraulikzylinders 1, den sogenannten Kolbenraum. Das Innenrohr 14a weist zu diesem Zweck Durchlässe auf, um einen ungehinderten Fluidausgleich innerhalb des Kolbenraums zu ermöglichen. Der von der Zylinderwand des Hydraulikzylinders 1 und der Kolbenstange 13 begrenzte Hohlraum bildet einen zweiten Arbeitsraum des Hydraulikzylinders 1, den sogenannten Ringraum. Die beiden Arbeitsräume 11a, 11b haben in diesem Ausführungsbeispiel unterschiedlich große hydraulisch wirksame Flächen, sodass der Hydraulikzylinder 1 als Differentialzylinder ausgeführt ist. Grundsätzlich ist jedoch auch eine Ausführung als Gleichgangzylinder möglich und sinnvoll.

Durch Druckbeaufschlagung eines der Arbeitsräume 11a, 11b kann der Kolben 12 nach links oder rechts verstellt werden, wodurch die Kolbenstange 13 eingefahren oder ausgefahren wird. Ein erster Druckanschluss 15a ist im Endstück 14 des Hydraulikzylinders 1 angeordnet und verläuft axial durch das Innenrohr 14a bis in den Arbeitsraum 11a. Ein zweiter Druckanschluss 15b ist im Bereich eines die Kolbenstange 13 dichtend umgebenden Führungsstücks des Hydraulikzylinders 1 angeordnet und mit dem Arbeitsraum 11b verbunden.

Eine technische Besonderheit des Hydraulikzylinders 1 bildet, wie bereits erläutert, eine mechanische Sperrvorrichtung, die den Kolben 12 in dessen Mittelstellung, also einer Stellung, die der Geradeausstellung der Hinterachslenkung entspricht und einen sicheren Ausfallzustand darstellt, innerhalb des Hydraulikzylinders 1 verrastet und damit arretiert. Hierzu liegt innerhalb des Innenrohrs 14a eine in axiale Richtung bewegliche Arretierhülse 16. Diese trägt in einem Endbereich einen als Verriegelungsraste dienenden Ringwulst 16a. Als Sperrglieder dienen eine Mehrzahl umfangsverteilt um die Arretierhülse 16 angeordnete Federzungen, die an ihrem Ende jeweils eine Rastnase 17 tragen, die in einer Ringnut 17a an der Innenseite des in der Kolbenstange 13 ausgebildeten Hohlraums 13a einrasten. In axialer Richtung greift die Arretierhülse 16 mit dem Ringwulst 16a über die im Endbereich des Innenrohrs 14a angeordneten Rastnasen 17 und die an der Innenwand der hohlen Kolbenstange 13 ausgebildete Ringnut 17a. In Figur 1 sind die Rastnasen 17a in ihrer Freigabestellung gezeigt, in der der Kolben 12 frei beweglich ist. Wird die Arretierhülse 16 nach links verstellt, so drängt der Ringwulst 16a die Rastnasen 17 nach außen, sodass diese in der Ringnut 17a verrasten. Dabei verhindert der Ringwulst 16a, dass die Federzungen nach innen ausweichen können und hält somit die Rastnasen 17 in ihrer Einrastposition und sorgt so als Verriegelungselement dafür, dass der Kolben 12 arretiert ist.

Die Federzungen und Rastnasen 17 sind mit dem Innenrohr 14a verbunden und bilden eine Art Spannzange, welche wiederum über das Innenrohr 14a starr mit dem Endstück 14 des Hydraulikzylinders 1 verbunden ist.

Die Arretierhülse dient als Stellelement für die von dem Ringwulst 16a gebildeten Verriegelungsraste. Ist diese wie in Figur 1 gezeigt nach rechts verstellt, so können die Federzungen nach innen federn und die Rastnasen 17 aus ihrer Sperrstellung nach innen ausweichen. Befindet sich der Kolben 12 in seiner Mittelstellung so können die Rastnasen 17 in die Ringnut 17a eingreifen, indem die Verriegelungshülse 16 nach links verstellt wird und der Ringwulst 16a die Rastnasen 17 nach außen drückt. Sobald der Kolben 12 aus seiner Mittelstellung heraus in die eine oder andere Richtung verstellt wurde, kann die Arretierhülse 16 nicht mehr in ihre Sperrstellung zurückgestellt werden, da die Rastnasen 17 nicht mehr nach außen in die Ringnut 17a ausweichen können und der Ringwulst 16a somit nicht mehr über die Rastnasen 17 geschoben werden kann. Folglich kann, solange sich der Kolben 12 nicht in der Mittelstellung befindet, die Arretierhülse 16 nicht bewegt werden.

Die Betätigung der Arretierhülse 16 und damit eine Entriegelung des Kolbens 12 erfolgt über einen vordruckgesteuerten Aktuator 18, der in das Endstück 14 des Hydraulikzylinders 1 integriert ist. Der Aktuator 18 wird durch einen Druckraum 18a und einen Federraum 18b gebildet, die von einem beweglich gelagerten Stellkolben 18c getrennt werden. Über einen Steueranschluss 18' kann der Druckraum 18a mit einem Steuerdruck druckbeaufschlagt werden, um den Stellkolben 18c nach rechts zu verstellen. Der Stellkolben 18c ist wiederum mit der Arretierhülse 16 verbunden, um diese in ihre Entsperrstellung zu verstellen. Eine Rückstellfeder im Inneren des Federraums 18b sorgt dafür, dass der Stellkolben 18c im drucklosen Zustand eine Rückstellkraft nach links erfährt. Sobald die Kolbenstange 13 bzw. der Kolben 12 ihre Mittelposition erreicht haben und die Rastnasen 17 in Eingriff mit der Ringnut 17a gelangen und somit die Verriegelungsraste 16a freigeben, wird der Stellkolben 18c unter der Krafteinwirkung der Rückstellfeder nach links bewegt und die Arretierhülse 16 somit in ihre Sperrstellung geführt.

Im Fehlerfalle, insbesondere bei Ausfall der Bordnetzversorgung, muss eine Aktivierung der Hinterachslenkung und Zentrierung in Geradeausstellung erfolgen. Auch bei schneller Vorwärtsfahrt kann es vorteilhaft sein, die Hinterachslenkung zu deaktivieren und in Mittelstellung zu arretieren, um das Fahrverhalten des Fahrzeugs bei hohen Geschwindigkeiten zu stabilisieren. Hierzu dient in beiden Fällen eine Sicherheitsschaltung mit einer Ventilanordnung 20, deren Funktion nachfolgend anhand der Figuren erläutert wird.

Die Sicherheitsschaltung ermöglicht eine wechselweise Entlastung eines der Arbeitsräume 11a, 11b zu einem Tankanschluss T hin. Die Sicherheitsschaltung umfasst hierzu eine Ventilanordnung 20 mit zwei mechanisch betätigten Absperrventilen 21a, 21b sowie einen hydraulisch betätigten Aktuator 22, dessen Steuereingang über ein elektrisch geschaltetes Absperrventil 23 mit dem Tankanschluss T und über Rückschlagventile 24a, 24b mit den Druckanschlüssen P1, P2 des Ventilblocks 2 verbunden ist.

Die Schaltventile 21a, 21b dienen dazu, wechselweise einen der Arbeitsräume 11a, 11b mit dem Tankanschluss T zu verbinden oder in der Mittelstellung, also der sicheren Ausfallstellung des Hydraulikzylinders 1, eine Verbindung zwischen den Arbeitsräumen 11a, 11b und dem Tankanschluss T zu sperren, sodass der Kolben 12 in seiner Mittelstellung hydraulisch gesperrt ist. Hierzu ist das Schaltventil 21a als normal offenes Ventil ausgeführt und das Ventil 21b als normal geschlossenes Ventil. Von dem Druckanschluss 15a des Hydraulikzylinders 1 führt eine Hydraulikverbindung über ein Rückschlagventil 25a und das normal offene Schaltventil 21a zum Tankanschluss T. Vom Druckanschluss 15b des Hydraulikzylinders 1 führt eine Hydraulikverbindung über ein Rückschlagventil 25b und das normal geschlossene Schaltventil 21b zum Tankanschluss T.

Die Betätigung der Schaltventile 21a, 21b erfolgt über die Kolbenstange 13, und zwar über einen in Umfangsrichtung umgestalteten Bereich 13b, der über einen Taster 19 (Tastelement), der wiederum die Schaltventile 21a, 21b schaltet, mechanisch abgetastet wird. Zu diesem Zweck ist im Ausführungsbeispiel die innen hohle Kolbenstange 13 über den Kolben 12 hinaus in dem Arbeitsraum 11a verlängert und umgreift das Innenrohr 14a. Zu ihrem Ende hin ist der Außendurchmesser der verlängerten Kolbenstange 13 in ihrem umgestalteten Bereich 13b beispielsweise in zwei abgeschrägten Abstufungen reduziert. Alternativ wäre es natürlich auch möglich, in dem umgestalteten Bereich 13b nur eine einzige Rampe ohne "Zwischenpodest" vorzusehen. Der Aktuator 22 dient dazu, den Taster 19 im Normalbetrieb von der Kolbenstange 13 abzuheben und somit aus der Zusammenwirkung zu bringen und die Ventile 21a, 21b in einen gesperrten Zustand zu schalten.

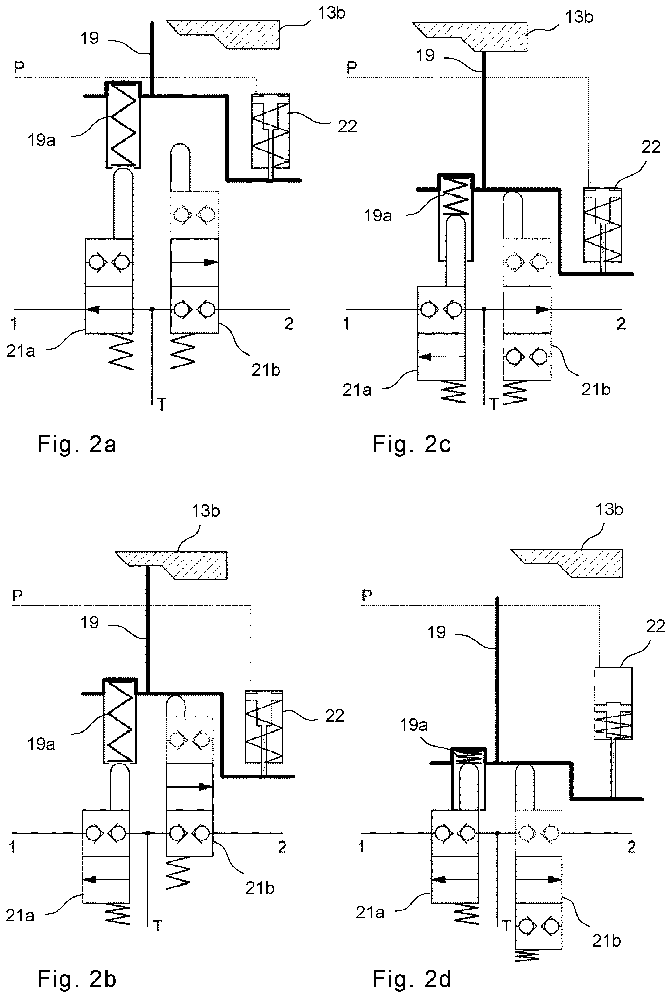

Die Schaltstellungen der Schaltventile 21a, 21b sowie die Zusammenwirkung mit dem Taster 19 ist in den Figuren 2a bis d gezeigt. In Figur 2a ist der Kolben 12 durch Druckbeaufschlagung im Arbeitsraum 11a nach rechts verstellt. Der umgestaltete Bereich 13b der Kolbenstange 13 befindet sich seitlich von dem Taster 19, sodass dieser sich in seiner maximal in den Hydraulikzylinder 1 eingefahrenen Stellung befindet. Sowohl das Schaltventil 21a als auch das Schaltventil 21b sind vom Taster 19 nicht betätigt, sodass sich Schaltventil 21a in seiner normal offenen Stellung befindet und den Arbeitsraum 11a mit dem Tankanschluss T verbindet, sodass der Kolben 13 durch von außen einwirkende Kräfte, beispielsweise Adhäsionskräfte auf die gelenkten Räder, in Richtung der Mittelstellung verstellt werden kann. Der Aktuator 22 ist drucklos unbetätigt. Diese Schaltstellung entspricht einem Fehler- bzw. Deaktivierungsfall, bei dem das Ventil 23 (Figur 1) stromlos geschaltet ist und somit die Steuerleitung des Aktuators 22 zum Tankanschluss T entlastet.

Figur 2b zeigt die Situation, in der sich der Kolben 12 und die Kolbenstange 13 in ihrer zentrierten Mittelstellung befinden, also der Geradeausstellung der Lenkung. Der Taster 19 befindet sich in dem abgestuften Bereich mit reduziertem Durchmesser des umgestalteten Bereichs 13b der Kolbenstange 13 und ist somit gegenüber Figur 2a um eine Schaltstufe weiter ausgefahren. Das Ventil 21a ist vom Taster 19 über ein Federelement 19a in die betätigte, geschlossene Ventilstellung geschaltet. Bezüglich des Schaltventils 21b hat der Taster 19 lediglich einen Leerhub ausgeführt, sodass das Schaltventil 21b sich weiterhin unbetätigt in seiner normal geschlossenen Schaltstellung befindet. Der Aktuator 22 ist weiterhin drucklos in seinem eingefahrenen Zustand. Dies entspricht einer deaktivierten Hinterachslenkung im zentrierten Zustand, also dem sicheren Ausfallzustand der Lenkung. Keiner der Druckräume 11a, 11b ist über die Ventilanordnung 20 in Richtung des Tankanschlusses verbunden, sodass der Kolben 12 in seiner Mittelstellung zwischen den Arbeitsräumen 11a, 11b eingespannt ist. In dieser Stellung kann die vom drucklosen Aktuator 18 aktivierte Sperrvorrichtung den Kolben zusätzlich mechanisch arretieren.

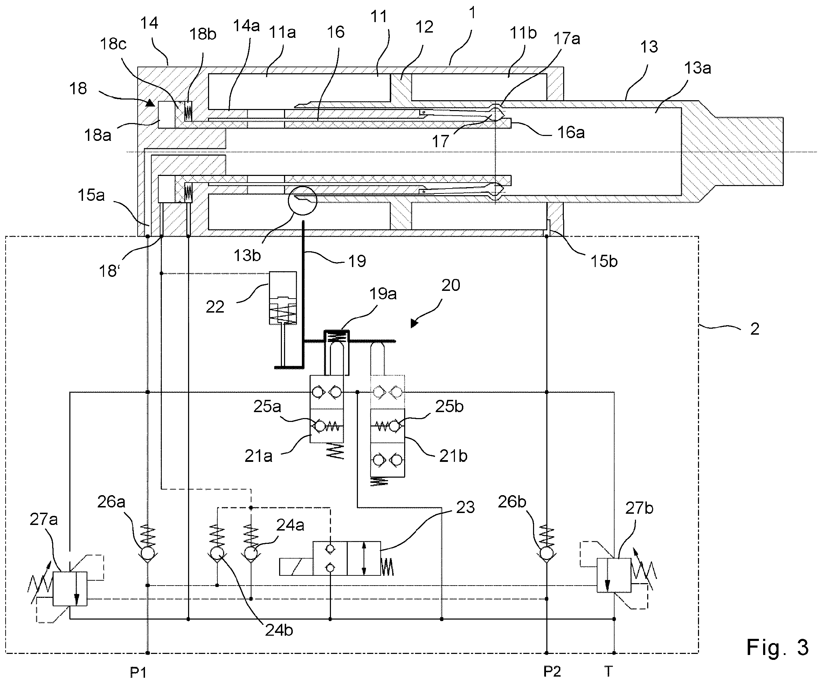

Figur 2c entspricht einer Kolbenstellung, bei der der Kolben 12 in Bezug auf seine Mittellage nach links verstellt ist. Der Taster 19 tastet somit den größeren Außendurchmesser des umgestalteten Bereichs 13b ab und befindet sich somit in einer doppelt ausgefahrenen, dritten Schaltstellung. Das Schaltventil 21a war bereits in die zweite Schaltstellung (Figur 3b) umgeschaltet und kann nicht weiter eingedrückt werden. Der Hub der Taste 19 wird durch das Federelement 19a aufgenommen. Das Schaltventil 21b ist durch den Taster 19 in seinen betätigten, offenen Schaltzustand geschaltet, sodass der Arbeitsraum 11b über das Ventil 25b und das Schaltventil 21b mit dem Tankanschluss T verbunden ist. Dies entspricht einem Zustand nach Deaktivierung der Hinterachslenkung, in der die (noch) ausgelenkte Kolbenstange durch auf die Räder wirkende Adhäsionskräfte in Richtung ihrer Mittelstellung verstellt werden kann.

In Figur 2d ist schließlich der Normalbetrieb der Hinterachslenkung gezeigt. Über den Steueranschluss P ist der Aktuator 22 mit einem Steuerdruck beaufschlagt und somit ausgefahren. Hierdurch hat der Aktuator 22 den Taster 19 in eine vierte, maximal ausgefahrene Stellung verstellt, in der der Taster 19 von der Kolbenstange 13 abgehoben und außer Eingriff gebracht ist. Das Schaltventil 21a kann nicht weiter geschaltet werden, der Hub der Taste 19 wird von dem jetzt noch stärker komprimierten Federelement 19a aufgenommen. Das Schaltventil 21b besitzt eine dritte Schaltstellung, in der das Schaltventil 21b über seine offene Schaltstellung hinaus in eine geschlossene Schaltstellung geschaltet ist. Somit ist eine Verbindung von beiden der Arbeitsräume 11a, 11b über die Ventilanordnung 20 zum Tankanschluss T gesperrt.

Dieser Zustand entspricht dem Normalbetrieb der Hinterachslenkung, indem das unbestromt geöffnete Sicherheitsventil 23 durch ein elektrisches Schaltsignal in den geschlossenen Zustand geschaltet ist und somit die Verbindung des Steueranschlusses des Aktuators 22 zum Tankanschluss T hin gesperrt ist. Durch Druckbeaufschlagung an einem der Pumpenanschlüsse P1, P2 wird über die Rückschlagventile 24a, 24b ein Steuerdruck am Aktuator 22 aufgebaut, sodass dieser ausfährt und der Taster 19 von der Kolbenstange 13 abhebt. In diesem Zustand kann keine Zentrierung der Kolbenstange 13 erfolgen, sondern die Kolbenstange wird lediglich durch Druckbeaufschlagung in einem der Arbeitsräume 11a, 11b über die Pumpenanschlüsse P1, P2 ausgelenkt.

Wie aus Figur 1 zu entnehmen, sind die Pumpenanschlüsse P1, P2 des Hydraulikblocks 2 jeweils über ein Rückschlagventil 26a, 26b mit den Druckanschlüssen 15a, 15b des Hydraulikzylinders 1 verbunden. Außerdem sind die Druckanschlüsse 15a, 15b jeweils über ein vordruckgesteuertes Lasthalteventil 27a, 27b mit dem Tankanschluss verbunden. Die Steueranschlüsse der Lasthalteventile 27a, 27b sind über Kreuz jeweils mit dem entgegengesetzten Pumpenanschluss P1, P2 des Hydraulikblocks 2 verbunden. Im Normalbetrieb, bei bestromt geschlossenem Sicherheitsventil 23, kann somit eine Auslenkung des Kolbens 12 nach rechts bzw. links erfolgen, je nachdem, an welchem der Pumpenanschlüsse P1, P2 ein Arbeitsdruck angelegt wird. Wird an dem Pumpenanschluss P1 beispielsweise ein Druck angelegt, so öffnet dieser über das Rückschlagventil 24b und den Steueranschluss 18' die Verriegelung des Hydraulikzylinders 1 und schaltet gleichzeitig den Aktuator 22 in den ausgelenkten Zustand, wodurch den Taster 19 aus der Zusammenwirkung mit dem umgestalteten Bereich 13b der Kolbenstange 13 angehoben wird. Die Ventilanordnung 20 ist somit in einem deaktivierten Zustand. Über das Rückschlagventil 26a wird an dem Druckeingang 15a des Hydraulikzylinders 1 Druck aufgebaut. Gleichzeitig wird das Lasthalteventil 27b geöffnet und somit der Druckanschluss 15b des Arbeitsraums 11b in Richtung Tankanschluss T durchverbunden, sodass der Kolben 12 nach rechts verstellt werden kann. Umgekehrt kann durch einen Arbeitsdruck am Pumpenanschluss P2 der Kolben 12 in entsprechender Weise nach links verstellt werden.

Des Weiteren ist es vorteilhaft, wenn die Lasthalteventile 27a, 27b zusätzlich als Überdruckventile ausgebildet sind, die bei Überschreiten eines an einem mit dem jeweiligen Arbeitsraum 11a, 11b verbundenen Druckanschluss 15a, 15b anliegenden Maximaldruckwertes öffnen. Somit werden gefährliche Druckverhältnisse im Lenksystem, die zu einer Beschädigung oder einem Versagen führen könnten, vermieden. Ein gefährlicher Überdruck kann beispielsweise aufgrund einer von den Rädern auf den Lenkzylinder ausgeübten Kraft bei einer harten Bordsteinberührung auftreten. Die Überdruckentlastung über die Lasthalteventile 27a, 27b schützt hierbei die Mechanik der Achse sowie die Mechanik des Hydraulikzylinders 1 und somit die gesamte Hydrauliklenkung vor Schäden durch Überlastung.

Wird zur Deaktivierung der Hinterachslenkung die Schaltspannung des Sicherheitsventils 23 abgeschaltet oder fällt diese durch einen Fehler bei Ausfall des Bordnetzes aus, so schaltet das Sicherheitsventil 23 in den geöffneten Zustand und entlastet die zu dem Aktuator 22 und dem Steueranschluss 18' des Aktuators 18 führende Steuerleitung zum Tank hin. Somit wird der Aktuator 22 drucklos und kehrt unter Einwirkung seiner Rückstellfeder in die eingefahrene Stellung zurück, sodass der Taster 19 wieder in Eingriff mit dem umgestalteten Bereich 13b der Kolbenstange 13 gelangt. Somit sorgt die Ventilanordnung 20 dafür, dass der Kolben 12 durch von außen einwirkende Kräfte in Richtung seiner Mittelstellung verstellt werden kann. Über die Rückschlagventile 26a, 26b kann dabei in den jeweils expandierenden Arbeitsraum Hydraulikmittel aus dem Tank nachgesaugt werden. Die Pumpenausgänge können hierzu über jeweils ein weiteres Rückschlagventil mit dem Tank verbunden sein (nicht gezeigt), sodass am drucklosen Pumpenanschluss P1, P2 Hydraulikmittel aus dem Tank angesaugt werden kann.

Ist die Mittelstellung erreicht, so bewirkt die Feder im Federraum 18b des Aktuators 18, dass die Arretierhülse 16 nach links verstellt wird und über den Ringwulst 16a die Rastnasen 17 nach außen drücken, sodass diese in Eingriff mit der Ringnut 17a gelangen und den Kolben 12 in der Mittelstellung zusätzlich mechanisch arretieren.

Wird das Sicherheitsventil 23 durch Anlegen einer Schaltspannung wieder geschlossen, so kann sich am Steuereingang 18' und am Aktuator 22 wieder Druck aufbauen, sodass die Arretierhülse 16 nach rechts in ihre Entsperrstellung gestellt und den Taster 19 über den Aktuator 22 außer Eingriff mit der Kolbenstange 13 angehoben sowie die Ventile 21a, 21b in ihren geschlossenen vierten Schaltzustand verstellt werden. Die Hinterachslenkung ist somit wieder in Betrieb und kann durch Druckbeaufschlagung an den Pumpenanschlüssen P1, P2 nach rechts bzw. links verstellt werden.

Der besondere Vorteil der erfindungsgemäßen Schaltung besteht einerseits darin, dass lediglich ein einziges elektrisch geschaltetes Ventil 23 benötigt wird, um eine Zentrierung und gegebenenfalls Arretierung des Kolbens in der Mittelstellung zu aktivieren und zu deaktivieren und dass anderseits die Ventilanordnung 20 über den Aktuator 22 hydraulisch außer Eingriff mit der Kolbenstange 13 gebracht wird, sodass die Schaltventile 21a, 21b statt bei jedem einzelnen Lenkeinschlag nur einmal bei Inbetriebnahme des Fahrzeugs und erstmaligem Druckaufbau umgeschaltet werden. Hierdurch verringern sich die Lastzyklen während der typischen Lebensdauer des Fahrzeugs von mehreren Millionen mal auf lediglich ca. 10.000 mal. Somit entsteht weniger Verschleiß und die Lebensdauer der Ventilanordnung 20 verlängert sich entsprechend bzw. muss weniger robust und langlebig ausgelegt werden.

In Figur 3 ist ein abgewandeltes Ausführungsbeispiel dargestellt, bei dem Rückschlagventile 25a, 25b in die Schaltventile 21a, 21b integriert sind. Da solche Schaltventile mit integrierter Rückschlagfunktion am Markt leicht erhältlich sind, kann auf diese Weise die Packungsdichte erhöht und der erforderliche Bauraum für den Ventilblock 2 verringert werden. Ansonsten entspricht die Schaltung aus Figur 3 in Aufbau und Funktion der in Figur 1 gezeigten.

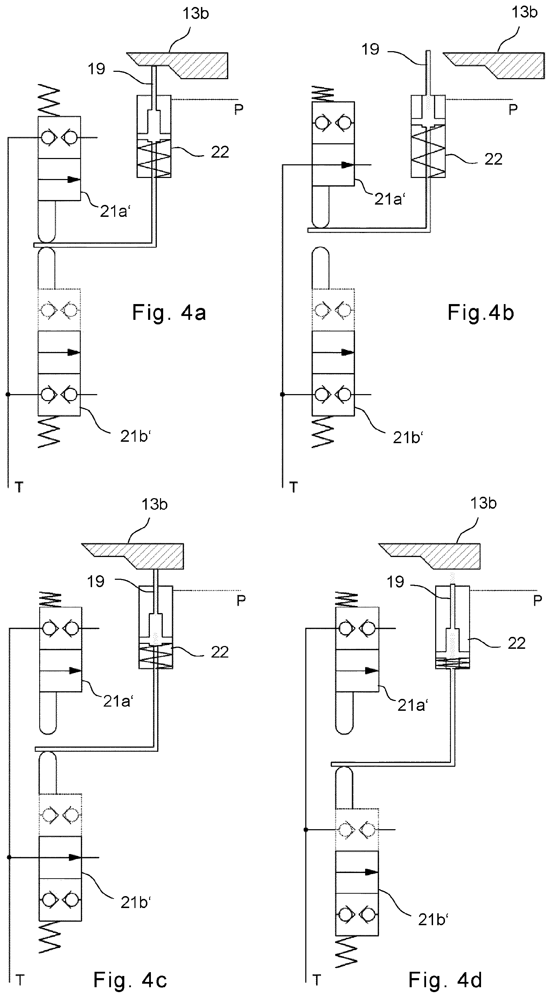

In den Figuren 4a bis 4d ist ausgehend von dem Ausführungsbeispiel aus Figur 1 ein alternativer Aufbau der Ventilanordnung 20 gezeigt. Statt eines normal offenen Ventils 21a und eines normal geschlossenen Ventils 21b werden in diesem Ausführungsbeispiel zwei normal geschlossene Ventile 21a', 21b' eingesetzt, die entgegengesetzt zueinander angeordnet sind. Außerdem ist das Tastelement 19 in der Art einer Kolbenstange mit dem Aktuator 22 integriert. In Figur 4a ist der Schaltzustand dargestellt, der der Mittelstellung des Kolbens 12 entspricht. Der mit dem Taster 19 verbundene Schaltarm befindet sich in der Mittellage zwischen den beiden Ventilen 21a', 21b', welche beide unbetätigt in ihrer geschlossenen Ventilstellung sind.

In Figur 4b ist der Kolben 12 nach rechts bewegt, sodass der Taster 19 von dem umgestalteten Bereich 13b der Kolbenstange 13 nicht mehr ausgelenkt wird und sich in seinem maximal eingefahrenen Zustand, dem ersten Schaltzustand, befindet. In diesem Zustand ist das obere Schaltventil 21a' von dem mit der Taste 19 verbundenen Schaltarm umgeschaltet und befindet sich im offenen Zustand, sodass der Arbeitsraum 11a über das Schaltventil 21a' zum Tank hin verbunden ist. Das Schaltventil 21b' ist unbetätigt und geschlossen.

In Figur 4c ist die Kolbenstange 13 nach links verstellt, sodass der Taster 19 von dem größeren Durchmesser des umgestalteten Bereichs 13b der Kolbenstange 13 um zwei Schaltstufen ausgefahren ist. In dieser Stellung schaltet der mit der Taste 19 verbundene Betätigungsarm das Schaltventil 21b' in die betätigte, geöffnete Schaltstellung, sodass der Arbeitsraum 11b über das Ventil 21b' mit dem Tankanschluss verbunden ist.

In Figur 4d ist der Normalbetrieb der Hinterachslenkung gezeigt. Über einen Steuerdruck am Eingang P des Aktuators 22 ist der Taster 19 angehoben und außer Eingriff mit der Kolbenstange 13 gebracht. Das Ventil 21a' ist weiterhin unbetätigt. Das Ventil 21b' ist über den umgeschaltet offenen Schaltzustand hinaus in einen geschlossenen Schaltzustand geschaltet. Somit ist keiner der Arbeitsräume 11a, 11b mit dem Tankanschluss T verbunden.

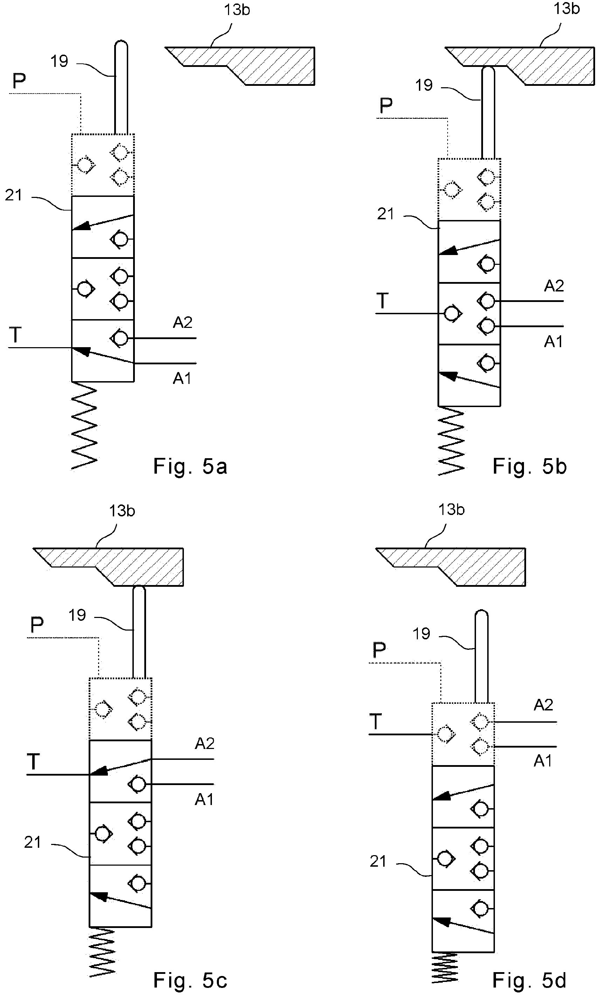

In den Figuren 5a bis d ist ein weiteres Ausführungsbeispiel für die Ventilanordnung 20 dargestellt, bei der lediglich ein einziges Schaltventil 21 zum Einsatz kommt, welches als 3/4-Wegeventil ausgeführt ist. Das Ventil 21 hat drei Anschlüsse, von denen zwei mit den Druckanschlüssen 15a, 15b des Hydraulikzylinders 1 und der dritte mit dem Tankanschluss T verbunden ist. Figur 5a zeigt wieder die Schaltstellung bei ausgefahrener Kolbenstange. In dieser Stellung ist der mit dem Druckanschluss 15a verbundene Anschluss A1 des Schaltventils 21 mit dem Tankanschluss T verbunden. Der mit dem Druckanschluss 15b verbundene Eingang A2 ist versperrt.

In der zweiten in Figur 5b gezeigten Schaltstellung sind beide Anschlüsse A1, A2 gesperrt. In der dritten in Figur 5c gezeigten Schaltstellung, die einer Auslenkung der Kolbenstange nach links entspricht, ist das Ventil 21 in die dritte Schaltstellung umgeschaltet. In dieser ist der mit dem Druckanschluss 15b verbundene Anschluss A2 mit dem Tankanschluss T verbunden. Der Anschluss A1 ist gesperrt. In Figur 5d ist ein hydraulisch geschalteter Schaltzustand gezeigt, bei dem über einen Steuerdruck am Anschluss P die vierte Schaltstellung erreicht ist, in welcher beide Anschlüsse A1, A2 gesperrt sind. Der Aktuator 22 ist in diesem Ausführungsbeispiel der besseren Übersichtlichkeit halber nicht separat dargestellt und kann beispielsweise in das Schaltventil 21 integriert ausgeführt sein. Der Vorteil eines integrierten Schaltventils 21 liegt darin, dass bauartbedingt eine Überschneidung der Schaltpunkte geometrisch ausgeschlossen ist. Somit können die erforderlichen Einbautoleranzen erheblich einfacher realisiert werden.

Wie im ersten Ausführungsbeispiel auch, können bei den in den Figuren 4a bis d und 5a bis d gezeigten Ventil 21a', 21b', 21 wie in Hinblick auf das erste Ausführungsbeispiel bereits erläutert wieder in der ersten und dritten Schaltstellung wirksame Rückschlagventile integriert sein.

Erfindungsgemäß ist somit eine hydraulische Deaktivierung der Ventilanordnung 20 erreicht. Die Schaltventile 21a, 21b, 21a', 21b' bzw. 21 die als Logikventile wirken und durch mechanische Betätigung den Auslenkungszustand der Kolbenstange 13 abbilden, werden somit nur noch im Fehler- bzw. Deaktivierungsfall der Schaltung betätigt. Die für die Dichtigkeit zuständigen Schaltventile werden zudem nur noch mit einer reinen Axialkraft betätigt. Somit ist die Robustheit der Anordnung erheblich verbessert.

Die erfindungsgemäße Hydraulikschaltung wurde in den Ausführungsbeispielen im Hinblick auf eine Hinterachslenkung eines mehrachsigen Fahrzeugs (LKW, Trailer, Schwerlastkran, Baumaschine oder dergleichen) beschrieben. Die Erfindung ist jedoch nicht hierauf beschränkt, sondern kann auch in anderen Hydraulikanwendungen eingesetzt werden, bei denen ein Hydraulikzylinder bei Ausfall oder Deaktivierung in eine sichere Ausfallstellung gebracht werden muss.

## Patentansprüche

1. Hydraulische Schaltung, insbesondere für ein Lenksystem eines mehrachsigen Fahrzeugs, mit
einem Hydraulikzylinder (1), der einen Zylinderraum (11), einen dichtend in dem Zylinderraum gelagerten Kolben (12), der den Zylinderraum (11) in zwei Arbeitsräume (11a, 11b) unterteilt, und mindestens eine von dem Kolben (12) getragene Kolbenstange (13) umfasst,
einer mechanisch schaltbaren Ventilanordnung (20) mit mindestens drei Schaltstellungen, und
einem mechanischen Tastelement (19), welches mit dem Kolben (12) oder der Kolbenstange (13) zusammenwirkt und ausgebildet ist, die Ventilanordnung (20) in Abhängigkeit der Auslenkung des Kolbens (12) zwischen den drei Schaltstellungen umzuschalten,
wobei die Ventilanordnung (20) ausgebildet ist, in einer ersten Schaltstellung einen ersten der Arbeitsräume (11a) mit einer Tankrückleitung (T) zu verbinden oder eine unidirektionale hydraulische Verbindung von dem ersten zu dem zweiten Arbeitsraum (11a, 11b) zu schalten, um eine Rückstellbewegung des Kolbens (12) in eine sichere Ausfallstellung zu ermöglichen, in einer zweiten Schaltstellung, die der sicheren Ausfallstellung des Kolbens (12) entspricht, die Verbindung zwischen den Arbeitsräumen (11a, 11b) oder zu der Tankrückleitung (T) zu sperren und in einer dritten Schaltstellung den zweiten Arbeitsraum (11b) mit der Tankrückleitung (T) oder einer weiteren Tankrückleitung zu verbinden oder eine unidirektionale hydraulische Verbindung von dem zweiten zu dem ersten Arbeitsraum (11b, 11a) zu schalten, um eine entgegengesetzte Rückstellbewegung des Kolbens (12) in die sichere Ausfallstellung zu ermöglichen,
**dadurch gekennzeichnet, dass**
die Ventilanordnung (20) eine vierte Schaltstellung aufweist, in der die Verbindung zwischen den Arbeitsräumen (11a, 11b) oder zu der Tankrückleitung (T) gesperrt ist und
die hydraulische Schaltung einen vom Hydraulikzylinder (1) separaten Aktuator, insbesondere hydraulischen Aktuator (22; 22) aufweist, welcher ausgebildet ist, bei Ansteuerung das Tastelement (19) aus der Zusammenwirkung mit dem Kolben (12) oder der Kolbenstange (13) abzuheben und die Ventilanordnung (20) in die vierte Schaltstellung zu schalten.

2. Hydraulische Schaltung nach Anspruch 1, bei der die Ventilanordnung (20) ein normal offenes Ventil (21a) und ein normal geschlossenes Ventil (21b) umfasst, welche jeweils zwischen einem der beiden Arbeitsräume (11a, 11b) und der Tankrückleitung (T) angeordnet sind und von dem Tastelement (19) gemeinsam geschaltet werden, wobei
in der ersten Schaltstellung die beiden Ventile (21a, 21b) sich in ihrer unbetätigten, normal offenen bzw. normal geschlossenen Ventilstellung befinden,
in der zweiten Schaltstellung das normal offene Ventil (21a) sich in der betätigten, geschlossenen Ventilstellung befindet und das normal geschlossene Ventil (21b) sich in der unbetätigten, normal geschlossenen Ventilstellung befindet,
in der dritten Schaltstellung das normal offene Ventil (21a) sich in der betätigten, geschlossenen Ventilstellung befindet und das normal geschlossene Ventil (21b) sich ebenfalls in der betätigten, offenen Ventilstellung befindet, und
in der vierten Schaltstellung das normal offene Ventil (21a) sich in der betätigten, geschlossenen Ventilstellung befindet und das normal geschlossene Ventil (21b) sich in einer über die offene Ventilstellung hinaus geschalteten, geschlossenen Ventilstellung befindet.

3. Hydraulische Schaltung nach Anspruch 2, bei der das normal offene Ventil (21a) über ein Federelement (19a) geschaltet wird, welches nach Erreichen der betätigten, geschlossenen Schaltstellung zum Ausgleich eines weiteren Hubwegs des Tastelements (19) in der dritten und vierten Schaltstellung komprimiert wird.

4. Hydraulische Schaltung nach Anspruch 1, bei der die Ventilanordnung (20) zwei normal geschlossene Ventile (21a', 21b') umfasst, welche jeweils zwischen einem der beiden Arbeitsräume (11a, 11b) und der Tankrückleitung (T) angeordnet sind und welche gegensinnig angeordnet sind, sodass sie von dem Tastelement (19) nacheinander geschaltet werden, wobei
in der ersten Schaltstellung das erste der beiden normal geschlossenen Ventile (21a') sich in der betätigten, offenen Ventilstellung befindet,
in der zweiten Schaltstellung beide Ventile (21a', 21b') sich in der unbetätigten, normal geschlossenen Ventilstellung befinden,
in der dritten Schaltstellung das erste Ventil (21a') sich in der unbetätigten, normal geschlossenen Ventilstellung befindet und das zweite Ventil (21b') sich in der betätigten, offenen Ventilstellung befindet, und
in der vierten Schaltstellung das erste Ventil (21a') sich in der unbetätigten, normal geschlossenen Ventilstellung befindet und das zweite Ventil (21b') sich in einer über die offene Ventilstellung hinaus geschalteten, geschlossenen Ventilstellung befindet.

5. Hydraulische Schaltung nach Anspruch 1, bei der die Ventilanordnung (20) ein 3/4-Wegeventile (21) mit mindestens drei Anschlüssen und mindestens vier Ventilstellungen umfasst, wobei einer der Anschlüsse mit der Tankrückleitung (T) und die beiden anderen Anschlüsse jeweils mit einem der Arbeitsräume (11a, 11b) verbunden sind.

6. Hydraulische Schaltung nach einem der vorangehenden Ansprüche, bei der das Tastelement (19) in der Art einer Kolbenstange in den hydraulischen Aktuator (22) integriert ausgeführt ist.

7. Hydraulische Schaltung nach einem der vorangehenden Ansprüche, bei der der hydraulische Aktuator (22) als einfach wirkender, federrückgestellter Stellzylinder ausgeführt ist.

8. Hydraulische Schaltung nach einem der vorangehenden Ansprüche, bei der zwischen den beiden Arbeitsräumen (11a, 11b) und der Tankrückleitung (T) in Reihe mit der Ventilanordnung (20) jeweils ein in Tankrichtung öffnendes Rückschlagventil (25a, 25b) angeordnet ist.

9. Hydraulische Schaltung nach einem der Ansprüche 1 bis 8, bei der in die Ventilanordnung (20) jeweils ein in der ersten und dritten Schaltstellung wirksames, in Tankrichtung öffnendes Rückschlagventil integriert ist.

10. Hydraulische Schaltung nach einem der vorangehenden Ansprüche, bei der
von jedem der beiden Arbeitsräume (11a, 11b) jeweils eine Rückleitung zu einem Tankanschluss (T) führt und in jeder der Rückleitungen ein hydraulisch entsperrbares Ventil (27a, 27b), insbesondere Lasthalteventil, angeordnet ist, und
die hydraulisch entsperrbaren Ventile (27a, 27b) als vordruckgesteuerte Ventile ausgebildet sind, deren Steueranschluss jeweils mit einem zu dem jeweils anderen Arbeitsraum (11b, 11a) führenden Pumpenanschluss (P1, P2) verbunden ist.

11. Hydraulische Schaltung nach einem der vorangehenden Ansprüche, bei der
der Hydraulikzylinder (1) mit einer mechanischen Sperrvorrichtung (16, 16a, 17, 17a) versehen ist, die den Kolben (12) bei Erreichen der sicheren Ausfallstellung innerhalb des Hydraulikzylinder (1) arretiert.

12. Hydraulische Schaltung nach Anspruch 11, bei der
die Sperrvorrichtung (16, 16a, 17, 17a) mindestens ein Sperrglied (17) aufweist, welches in gesperrtem Zustand von einem Verriegelungselement (16, 16a) in einer Einrastposition (17a) gehalten wird, und
wobei das Verriegelungselement (16a) über einen zweiten, von Kolben (12) und Kolbenstange (13) separaten, hydraulisch betätigten Aktuator (18) zwischen einer Sperrstellung, in der das Verriegelungselement (16, 16a) das Sperrglied (17) in der Einrastposition (17a) hält, und einer Entsperrstellung, in der das Verriegelungselement (16, 16a) das Sperrglied (17) freigibt, verstellbar ist.

13. Hydraulische Schaltung nach Anspruch 12, bei der die Steuereingänge des ersten, auf das Tastelement wirkenden Aktuators (22) und des zweiten, auf das Verriegelungselement (16, 16a) wirkenden Aktuators (18) miteinander verbunden sind und mit demselben Steuerdruck beaufschlagt werden.

14. Hydraulische Schaltung nach einem der vorangehenden Ansprüche mit einem elektrisch geschalteten, stromlos geöffneten Absperrventil (23), welches eine mit dem auf das Tastelement (19) wirkenden Aktuator (22) verbundene Steuerleitung mit einem Tankanschluss (T) verbindet.

15. Hydraulische Schaltung nach einem der vorangehenden Ansprüche bei der die Ventilanordnung (20) gegebenenfalls mit weiteren hydraulischen Schaltungselementen in einen mit dem Hydraulikzylinder (1) in baulicher Einheit verbundenen Ventilblock (2) integriert ist.

## Claims

1. Hydraulic circuit, in particular for a steering system of a multi-axle vehicle, comprising
a hydraulic cylinder (1) which includes a cylinder chamber (11), a piston (12) sealingly mounted in the cylinder chamber (11) and dividing the cylinder chamber into two working chambers (11a, 11b), and at least one piston rod (13) carried by the piston (12),
a mechanically switchable valve arrangement (20) with at least three switching positions, and
a mechanical probe element (19), which interacts with the piston (12) or the piston rod (13) and is configured to switch the valve arrangement (20) between the three switching positions depending on the deflection of the piston (12),
wherein the valve arrangement (20) is configured, in a first switching position, to connect a first of the working chambers (11a) to a tank return line (T) or to establish a unidirectional hydraulic connection from the first to the second working chamber (11a, 11b) to enable a return movement of the piston (12) into a safe fail position; in a second switching position, which corresponds to the safe fail position of the piston (12), to block the connection between the working chambers (11a, 11b) or to the tank return line (T); and in a third switching position, to connect the second working chamber (11b) to the tank return line (T) or to an additional tank return line, or to establish a unidirectional hydraulic connection from the second to the first working chamber (11b, 11a), to enable an opposite return movement of the piston (12) into the safe fail position,
**characterized in that**
the valve arrangement (20) includes a fourth switching position in which the connection between the working chambers (11a, 11b) or to the tank return line (T) is blocked, and
the hydraulic circuit comprises an actuator separate from the hydraulic cylinder (1), in particular a hydraulic actuator (22; 22), which is configured, when actuated, to disengage the probe element (19) from interaction with the piston (12) or the piston rod (13), and to switch the valve arrangement (20) into the fourth switching position.

2. Hydraulic circuit according to claim 1, in which the valve arrangement (20) comprises a normally open valve (21a) and a normally closed valve (21b), which are each arranged between one of the two working chambers (11a, 11b) and the tank return line (T) and are switched jointly by the probe element (19), wherein
in the first switching position, the two valves (21a, 21b) are in their unactuated state, in either the normally open or normally closed position,
in the second switching position, the normally open valve (21a) is in the actuated, closed valve position and the normally closed valve (21b) is in the unactuated, normally closed valve position,
in the third switching position, the normally open valve (21a) is in the actuated, closed valve position and the normally closed valve (21b) is also in the actuated, open valve position, and
in the fourth switching position, the normally open valve (21a) is in the actuated, closed valve position and the normally closed valve (21b) is in a closed valve position that is switched beyond the open valve position.

3. Hydraulic circuit according to claim 2, in which the normally open valve (21a) is switched via a spring element (19a) which, after reaching the actuated, closed switching position, is compressed in the third and fourth switching positions to compensate for a further stroke travel of the probe element (19).

4. Hydraulic circuit according to claim 1, in which the valve arrangement (20) comprises two normally closed valves (21a', 21b') which are each arranged between one of the two working chambers (11a, 11b) and the tank return line (T) and which are arranged in opposite directions so that they are switched in succession by the probe element (19), wherein
in the first switching position, the first of the two normally closed valves (21a') is in the actuated (open) valve position,
in the second switching position, both valves (21a', 21b') are in their non-actuated (normally closed) position,
in the third switching position, the first valve (21a') is in the non-actuated, normally closed valve position and the second valve (21b') is in the actuated, open valve position, and
in the fourth switching position, the first valve (21a') is in the unactuated, normally closed valve position and the second valve (21b') is in a closed valve position that is switched beyond the open valve position.

5. Hydraulic circuit according to claim 1, in which the valve arrangement (20) comprises a 3/4-way valve (21) with at least three ports and at least four valve positions, one of the ports being connected to the tank return line (T) and the other two ports each being connected to one of the working chambers (11a, 11b).

6. Hydraulic circuit according to any one of the preceding claims, wherein the probe element (19) is integrated into the hydraulic actuator (22) and configured like a piston rod.

7. Hydraulic circuit according to any one of the preceding claims, wherein the hydraulic actuator (22) is designed as a single-acting, spring-loaded actuating cylinder.

8. Hydraulic circuit according to any one of the preceding claims, in which a non-return valve (25a, 25b) that opens in the direction of the tank is arranged between each of the two working chambers (11a, 11b) and the tank return line (T), in series with the valve arrangement (20).

9. Hydraulic circuit according to any one of claims 1 to 8, in which a non-return valve which is effective in the first and third switching position and opens in the tank direction is integrated in the valve arrangement (20).

10. Hydraulic circuit according to any one of the preceding claims, wherein
a return line leads from each of the two working chambers (11a, 11b) to a tank port (T) and a hydraulically pilot-operated valve (27a, 27b), in particular a load-holding valve, is arranged in each of the return lines, and
the hydraulically unlockable valves (27a, 27b) are designed as pilot-pressure-controlled valves, each having a control port connected to the pump port (P1, P2) leading to the respective opposite working chamber (11b, 11a).

11. Hydraulic circuit according to any one of the preceding claims, wherein
the hydraulic cylinder (1) is provided with a mechanical locking device (16, 16a, 17, 17a) which locks the piston (12) within the hydraulic cylinder (1) when the safe failure position is reached.

12. Hydraulic circuit according to claim 11, in which
the locking device (16, 16a, 17, 17a) features at least one locking member (17) which, in the locked state, is held in a latching position (17a) by a locking element (16, 16a), and
wherein the locking element (16a) is adjustable by a second hydraulically actuated actuator (18), which is separate from the piston (12) and piston rod (13), between a locked position, in which the locking element (16, 16a) retains the locking member (17) in the engaged position (17a), and an unlocked position, in which the locking element (16, 16a) releases the locking member (17).

13. Hydraulic circuit according to claim 12, wherein the control inlets of the first actuator (22), which acts on the probe element, and the second actuator (18), which acts on the locking element (16, 16a), are connected to one another and are subjected to the same control pressure.

14. Hydraulic circuit according to any one of the preceding claims, comprising an electrically controlled, de-energized open shut-off valve (23), which connects a control line associated with the actuator (22) acting on the probe element (19) to a tank port (T).

15. Hydraulic circuit according to any one of the preceding claims, in which the valve arrangement (20) is optionally integrated, together with additional hydraulic circuit elements if applicable, into a valve block (2) that is structurally connected to the hydraulic cylinder (1) as a structurally integrated unit.

## Revendications

1. Circuit hydraulique, en particulier pour un système de direction d'un véhicule à essieux multiples, avec
un vérin hydraulique (1) qui comprend un espace de vérin (11), un piston (12) logé de manière étanche dans l'espace de vérin, piston qui divise l'espace de vérin (11) en deux espaces de travail (11a, 11b), et au moins une tige de piston (13) portée par le piston (12),
un agencement de soupape (20) commutable mécaniquement avec au moins trois positions de commutation, et
un élément de palpage mécanique (19) qui coopère avec le piston (12) ou la tige de piston (13) et est réalisé pour commuter l'agencement de soupape (20) entre les trois positions de commutation en fonction de la déviation du piston (12),
dans lequel l'agencement de soupape (20) est réalisé pour raccorder, dans une première position de commutation, un premier des espaces de travail (11a) à une conduite de retour de réservoir (T) ou pour commuter une liaison hydraulique unidirectionnelle du premier au deuxième espace de travail (11a, 11b) pour permettre un mouvement de retour du piston (12) dans une position de défaillance sûre, dans une deuxième position de commutation qui correspond à la position de défaillance sûre du piston (12) pour bloquer la liaison entre les espaces de travail (11a, 11b) ou vers la conduite de retour de réservoir (T) et dans une troisième position de commutation pour relier le deuxième espace de travail (11b) à la conduite de retour de réservoir (T) ou à une conduite de retour de réservoir supplémentaire ou pour commuter une liaison hydraulique unidirectionnelle du deuxième au premier espace de travail (11b, 11a) pour permettre un mouvement de retour opposé du piston (12) dans la position de défaillance sûre,
**caractérisé en ce que**
l'agencement de soupape (20) présente une quatrième position de commutation dans laquelle la liaison entre les espaces de travail (11a, 11b) ou vers la conduite de retour de réservoir (T) est bloquée et
le circuit hydraulique présente un actionneur séparé du vérin hydraulique (1), en particulier un actionneur hydraulique (22 ; 22) qui est réalisé, lors de la commande, pour lever l'élément de palpage (19) de la coopération avec le piston (12) ou la tige de piston (13) et pour commuter l'agencement de soupape (20) dans la quatrième position de commutation.

2. Circuit hydraulique selon la revendication 1, dans lequel l'agencement de soupape (20) comprend une soupape normalement ouverte (21a) et une soupape normalement fermée (21b) qui sont disposées respectivement entre un des deux espaces de travail (11a, 11b) et la conduite de retour de réservoir (T) et sont commutées conjointement par l'élément de palpage (19), dans lequel
dans la première position de commutation, les deux soupapes (21a, 21b) se trouvent dans leur position non actionnée, normalement ouverte ou normalement fermée,
dans la deuxième position de commutation, la soupape normalement ouverte (21a) se trouve dans la position de soupape fermée actionnée, et la soupape normalement fermée (21b) se trouve dans la position de soupape normalement fermée non actionnée,
dans la troisième position de commutation, la soupape normalement ouverte (21a) se trouve dans la position de soupape normalement fermée actionnée, et la soupape normalement fermée (21b) se trouve également dans la position de soupape ouverte actionnée, et
dans la quatrième position de commutation, la soupape normalement ouverte (21a) se trouve dans la position de soupape fermée actionnée, et la soupape normalement fermée (21b) se trouve dans une position de soupape fermée commutée au-delà de la position de soupape ouverte.

3. Circuit hydraulique selon la revendication 2, dans lequel la soupape normalement ouverte (21a) est commutée par le biais d'un élément de ressort (19a) qui après avoir atteint la position de commutation fermée actionnée, est comprimé pour compenser une course de levage supplémentaire de l'élément de palpage (19) dans la troisième et la quatrième position de commutation.

4. Circuit hydraulique selon la revendication 1, dans lequel l'agencement de soupape (20) comprend deux soupapes normalement fermées (21a', 21b') qui sont disposées respectivement entre un des deux espaces de travail (11a, 11b) et la conduite de retour de réservoir (T) et qui sont disposées en sens inverse de sorte qu'elles sont commutées consécutivement par l'élément de palpage (19),
dans la première position de commutation, la première des deux soupapes normalement fermées (21a') se trouve dans la position de soupape ouverte actionnée,
dans la deuxième position de commutation, les deux soupapes (21a', 21b') se trouvent dans la position de soupape normalement fermée non actionnée,
dans la troisième position de commutation, la première soupape (21a') se trouve dans la position de soupape normalement fermée non actionnée, et la deuxième soupape (21b') se trouve dans la position de soupape ouverte actionnée, et
dans la quatrième position de commutation, la première soupape (21a') se trouve dans la position de soupape normalement fermée non actionnée, et la deuxième soupape (21b') se trouve dans une position de soupape fermée commutée au-delà de la position de soupape ouverte.

5. Circuit hydraulique selon la revendication 1, dans lequel l'agencement de soupape (20) comprend un distributeur 3/4 (21) avec au moins trois raccords et au moins quatre positions de soupape, dans lequel un des raccords est relié à la conduite de retour de réservoir (T) et les deux autres raccords sont reliés respectivement à l'un des espaces de travail (11a, 11b).

6. Circuit hydraulique selon l'une quelconque des revendications précédentes, dans lequel l'élément de palpage (19) est réalisé à la manière d'une tige de piston intégrée à l'actionneur hydraulique (22).

7. Circuit hydraulique selon l'une quelconque des revendications précédentes, dans lequel l'actionneur hydraulique (22) est réalisé en tant que vérin de réglage à rappel par ressort à simple effet.

8. Circuit hydraulique selon l'une quelconque des revendications précédentes, dans lequel un clapet de retenue (25a, 25b) s'ouvrant respectivement dans le sens du réservoir est disposé entre les deux espaces de travail (11a, 11b) et la conduite de retour de réservoir (T) en série avec l'agencement de soupape (20).

9. Circuit hydraulique selon l'une quelconque des revendications 1 à 8, dans lequel un clapet de retenue s'ouvrant dans le sens du réservoir et agissant dans la première et la troisième position de commutation est intégré dans l'agencement de soupape (20).

10. Circuit hydraulique selon l'une quelconque des revendications précédentes, dans lequel
une conduite de retour mène de chacun des deux espaces de travail (11a, 11b) respectivement à un raccord de réservoir (T) et une soupape déblocables de manière hydraulique (27a, 27b), en particulier une soupape de maintien de charge, est disposée dans chacune des conduites de retour, et
les soupapes déblocables de manière hydraulique (27a, 27b) sont réalisées comme soupapes commandées par une pression d'entrée, dont le raccord de commande est relié à un raccord de pompe (P1, P2) menant à l'autre espace de travail (11b, 11a) respectif.

11. Circuit hydraulique selon l'une quelconque des revendications précédentes, dans lequel
le vérin hydraulique (1) est doté d'un dispositif de blocage mécanique (16, 16a, 17, 17a) qui arrête le piston (12) à l'intérieur du vérin hydraulique (1) lorsque la position de défaillance sûre est atteinte.

12. Circuit hydraulique selon la revendication 11, dans lequel
le dispositif de blocage (16, 16a, 17, 17a) présente au moins un organe de blocage (17) qui est maintenu dans l'état bloqué par un élément de verrouillage (16, 16a) dans une position d'encliquetage (17a) et
dans lequel l'élément de verrouillage (16a) est déplaçable par le biais d'un deuxième actionneur (18) actionné de manière hydraulique séparé du piston (12) et de la tige de piston (13) entre une position de blocage dans laquelle l'élément de verrouillage (16, 16a) maintient l'organe de blocage (17) dans la position d'encliquetage (17a) et une position de déblocage dans laquelle l'élément de verrouillage (16, 16a) libère l'organe de blocage (17).

13. Circuit hydraulique selon la revendication 12, dans lequel les entrées de commande du premier actionneur (22) agissant sur l'élément de palpage et du deuxième actionneur (18) agissant sur l'élément de verrouillage (16, 16a) sont reliées entre elles et sont soumises à la même pression de commande.

14. Circuit hydraulique selon l'une quelconque des revendications précédentes avec une soupape de blocage (23) ouverte hors tension et commutée électriquement qui relie une conduite de commande reliée à l'actionneur (22) agissant sur l'élément de palpage (19) à un raccord de réservoir (T).

15. Circuit hydraulique selon l'une quelconque des revendications précédentes dans lequel l'agencement de soupape (20) est intégré le cas échéant à des éléments de commutation hydraulique supplémentaires, dans un bloc de soupape (2) relié au vérin hydraulique (1) en tant qu'unité structurelle.
